# FASCICULE DE BREVET EUROPEEN

(11) **EP 0 588 708 B1**
(45) Date de publication et mention de la délivrance du brevet: **02.01.1997**
(21) Numéro de dépôt: 93402228.6
(22) Date de dépôt: 14.09.1993
(51) Int. Cl.: B60S 1/50, B60S 1/04, B62D 25/08, B60H 1/28

(54) **Dispositif pour le lavage et l'essuyage d'un pare-brise de véhicule**
Wasch- und Wischanlage für Scheiben an Kraftfahrzeugen
Apparatus for washing and wiping the windscreen of a vehicle

(30) Priorité: 15.09.1992 FR 9210970
(43) Date de publication de la demande: 23.03.1994
(73) Titulaire: VALEO SYSTEMES D'ESSUYAGE, 78321 La Verrière (FR)
(72) Inventeur: Eustache, Jean-Pierre, F-92160 Antony (FR); Berge, Gilles, F-78120 Clairefontaine en Yvelines (FR)
(74) Mandataire: Martin, Jean-Jacques

(56) Documents cités:
- EP-A- 0 321 330
- EP-A- 0 354 646
- FR-A- 2 613 303
- FR-A- 2 668 110
- PATENT ABSTRACTS OF JAPAN vol. 016, no. 239 (M-1258)2 Juin 1992 & JP-A-04 050 060 (ASMO CO. LTD. ET AL) 19 Février 1992

## Description

La présente invention concerne un dispositif pour le lavage et l'essuyage d'un pare-brise de véhicule, notamment de véhicule automobile, comportant un capot situé en retrait du bord inférieur du pare-brise.

L'espace situé entre le capot et le bord inférieur du pare-brise sert habituellement au montage de moyens d'essuyage du pare-brise, ainsi que d'une admission d'air depuis l'extérieur vers l'intérieur du véhicule, munie en entrée d'une grille d'entrée d'air. Le véhicule comporte également des moyens pour le lavage du pare-brise, constitués d'un réservoir de liquide lave-glace et de moyens pour réaliser l'aspersion du pare-brise avec ce liquide. Le réservoir de liquide lave-glace est habituellement disposé sous le capot, dans le compartiment avant du véhicule. Le montage sur le véhicule des moyens d'essuyage, de l'admission d'air, de la grille d'entrée d'air, du réservoir et des moyens pour réaliser l'aspersion du pare-brise sont des opérations qui requièrent un temps de main-d'oeuvre important, car difficilement automatisables, et par conséquent coûteuses.

On a proposé d'intégrer dans des dispositifs d'essuyage et de lavage monoblocs la grille d'entrée d'air, l'admission d'air, le réservoir de liquide lave-glace, les moyens d'essuyage et les moyens pour réaliser l'aspersion du pare-brise, de façon à simplifier l'opération de montage dans le véhicule et la rendre automatisable (cf. EP-A-0 354 646, par exemple).

Toutefois, les dispositifs d'essuyage et de lavage monoblocs proposés restent spécifiques à un véhicule donné, avec l'inconvénient de présenter un coût de fabrication élevé.

On connaît par ailleurs par JP-A-4-50060 un dispositif modulaire selon le préambule de la revendication 1.

Ce dispositif connu est censé permettre une diminution de la main d'oeuvre pour son assemblage et une diminution des coûts.

La présente invention vise à proposer un tel dispositif, qui tout en permettant une standardisation d'au moins une partie de ses composants, réduise les problèmes d'encombrement sous le capot-moteur du véhicule ou à son voisinage.

Ainsi la présente invention propose un dispositif ayant les particularités de la revendication 1.

Des aspects préférés, mais non limitatifs de ce dispositif, sont exposés dans les sous-revendications.

D'autres caractéristiques et avantages de la présente invention apparaîtront à la lecture de la description qui va suivre, d'exemples de réalisation non limitatifs de l'invention, et au vu du dessin annexé sur lequel :
- la figure 1 est une vue en perspective schématique d'un véhicule équipé d'un dispositif modulaire conforme à l'invention,
- la figure 2 est une vue en perspective schématique, avec arrachement partiel, montrant un dispositif modulaire conforme à l'invention,
- la figure 3 est une vue en section schématique selon le repère III de la figure 2,
- la figure 4 est une vue en section schématique selon le repère IV de la figure 2,
- la figure 5 est une vue en section schématique selon le repère V de la figure 2,
- la figure 6 est une vue en coupe longitudinale d'un arbre d'entraînement selon une réalisation de l'invention,
- la figure 7 est une vue en section schématique partielle montrant un exemple de réalisation de moyens d'assemblage entre le module formant réservoir et un module d'essuyage,
- la figure 8 est une vue montrant un détail de l'assemblage entre le module formant réservoir et un module d'essuyage,
- la figure 9 est une vue en perspective schématique partielle d'une variante de réalisation de dispositif modulaire selon l'invention,
- la figure 10 est une vue en section transversale schématique selon le repère X de la figure 9,
- la figure 11 est une vue en perspective schématique d'une variante de réalisation du module formant réservoir selon l'invention,
- la figure 12 est une vue schématique en perspective montrant une armature métallique tubulaire visant à rigidifier le module formant réservoir et servant également de moyens d'assemblage avec au moins un module d'essuyage.

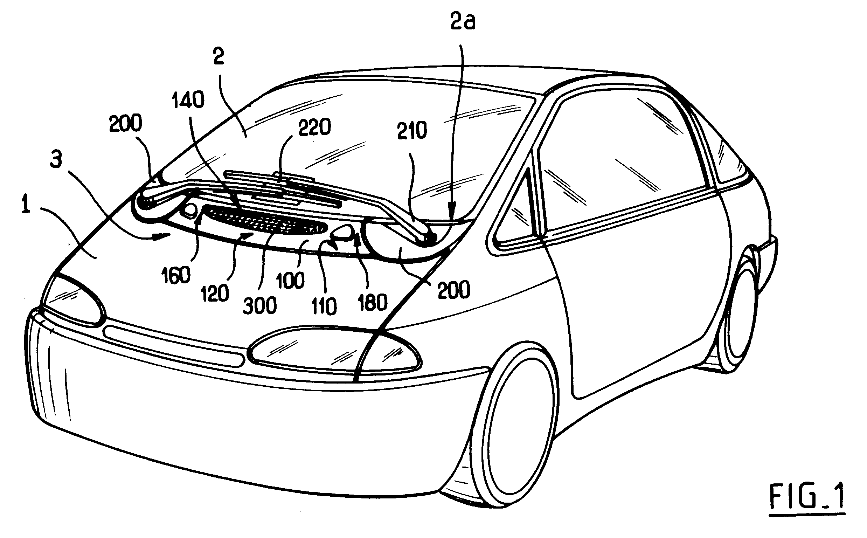

On a représenté de façon schématique en perspective sur la figure 1 un véhicule automobile comportant un capot 1 situé en retrait du bord inférieur 2a du pare-brise 2, équipé d'un dispositif modulaire 3 pour le lavage et l'essuyage du pare-brise 2 conforme à l'invention. Suivant l'exemple de réalisation représenté sur les figures 1 à 6, le dispositif modulaire 3 est constitué d'un module formant réservoir 100 et de deux modules d'essuyage 200. Le module formant réservoir 100 présente une face supérieure apparente 110 généralement plane et située dans le prolongement de la surface externe du capot 1, s'étendant longitudinalement sur une partie de la largeur du véhicule de part et d'autre d'un plan de symétrie longitudinal pour la carrosserie du véhicule et latéralement entre le capot 1 et le bord inférieur 2a du pare-brise 2. Les modules d'essuyage 200 présentent également une surface supérieure apparente s'étendant généralement dans le prolongement de la surface externe du capot 1 et sont disposés de part et d'autre du module formant réservoir 100, qu'ils prolongent jusqu'aux côtés du véhicule en couvrant l'espace compris entre le capot 1 et le bord inférieur 2a du pare-brise 2. Chaque module d'essuyage 200 porte un bras d'essuie-glace 210 connu en lui-même, muni à une extrémité de moyens de fixation sur un arbre d'entraînement 212 couplé à des moyens d'entraînement en rotation de l'arbre et muni à l'autre extrémité d'un balai 220 portant une raclette d'essuyage du pare-brise 2.

Le module formant réservoir 100 présente deux parties creuses allongées 120 et 140 formant des cavités 121 et 141 aptes à contenir un liquide lave-glace, respectivement adjacentes au capot 1 et au bord inférieur 2a du pare-brise 2 ,s'étendant côte-à-côte et de façon espacée, et deux parties latérales 160 et 180 joignant les extrémités desdites parties creuses allongées 120 et 140 de façon à faire communiquer entre elles lesdites cavités, les parois en regard des deux parties 120, 140 et des parties latérales 160, 180 formant entre elles un conduit 190 orienté généralement perpendiculairement au plan de la face supérieure 110 et débouchant sur cette face, pour guider l'air depuis l'extérieur vers l'intérieur du véhicule. Avantageusement, comme représenté, une grille d'entrée d'air 300 est placée à l'entrée dudit conduit, légèrement en retrait de la face supérieure 110, cette grille pouvant être soit rapportée soit élaborée en une seule pièce avec le module 100 de façon à former un ensemble monobloc.

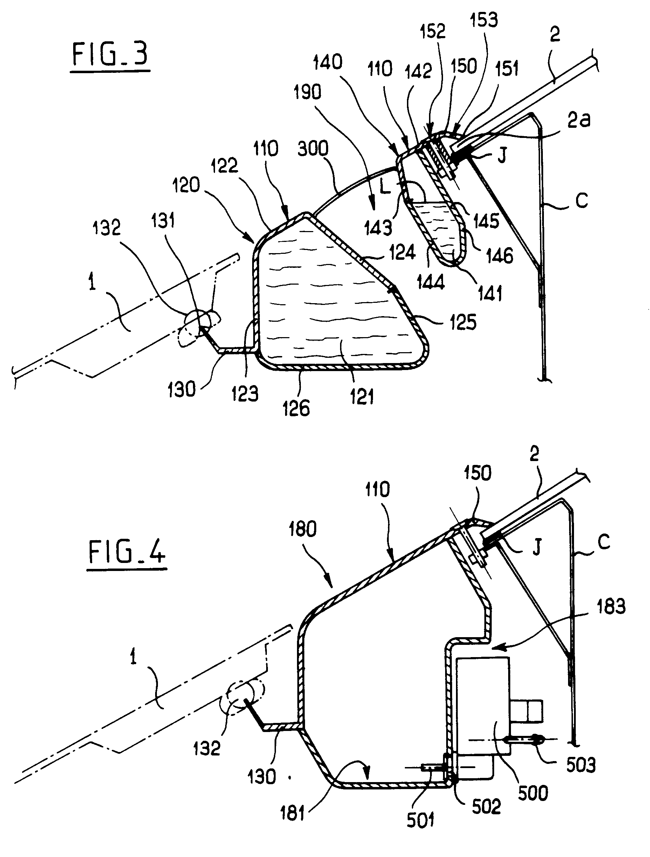

Si l'on se reporte plus particulièrement à la figure 3 qui est une vue en section prise dans un plan médian transversal pour le module formant réservoir, on remarque que la partie creuse allongée 120 adjacente au capot 1 présente une section transversale s'élargissant vers le bas. Plus précisément, la partie creuse allongée 120 adjacente au capot 1 est délimitée par une paroi ayant en section transversale un contour généralement convexe vers l'extérieur, formé par cinq segments réunis par des arrondis. On discerne un segment supérieur 122 contenu dans le plan de la face supérieure 110, prolongé vers le bas à son extrémité proche du capot 1 par un segment vertical 123 et à son extrémité éloignée du capot 1 par un segment oblique 124 dirigé vers le bas en éloignement du côté vertical 123, le segment 124 étant prolongé à environ mi-hauteur du côté vertical 123 par un deuxième segment oblique 125, plus pentu. Un segment 126 horizontal joint le segment vertical 123 et le segment 125 et correspond au fond de la cavité 121.

La partie creuse allongée 140, adjacente au pare-brise 2, formant la cavité 141 est délimitée par une paroi présentant en section transversale un contour généralement convexe vers l'extérieur formé par cinq segments réunis par des arrondis. Plus précisément, on discerne un segment supérieur 142 situé dans le plan de la face supérieure 110 et dans l'alignement du segment 122, prolongé à son extrémité proche du conduit 190 vers le bas par un segment 143 oblique, légèrement incliné par rapport à la verticale contenant le segment 123 et en éloignement de cette dernière, prolongé à la hauteur environ de l'extrémité supérieure du segment 122, par un segment 144 moins pentu s'étendant jusqu'à la hauteur de l'angle formé par les segments 124 et 125. Le segment 142 est prolongé à angle droit et vers le bas, à son extrémité éloignée du conduit 190 par un segment 145 parallèle au segment 144 et s'étendant jusqu'à mi-hauteur environ de ce dernier, prolongé par un segment vertical 146 rejoignant par un arrondi le segment 144 à hauteur environ de l'angle formé par les segments 124 et 125. Les parois en regard des parties creuses allongées 120 et 140, c'est-à-dire en section transversale les segments 124, 125 et 143, 144, forment un conduit généralement convergent depuis la surface supérieure apparente 110 vers l'intérieur du véhicule.

Conformément à un mode de réalisation avantageux de l'invenle module formant réservoir 100 est muni longitudinalement, sur son côté adjacent au capot 1, d'une languette 130 recourbée vers le haut, formant gouttière, et dont le bord libre 131 se situe sous le capot 1. Plus précisément, la languette 130 se raccorde sur la partie inférieure dudit côté longitudinal, et plus particulièrement, dans le plan de la section transversale de la figure 3, à angle droit de l'extrémité inférieure du segment vertical 123.

De préférence, comme représenté, la languette 130 est munie sur son bord libre longitudinal 131 d'un joint d'étanchéité 132 de section transversale initiale circulaire, prenant en s'appliquant contre la surface interne du capot 1 la forme représentée en pointillés.

Conformément à un autre mode de realisation avantageux de l'invention, le module formant réservoir 100 est muni sur son côté longitudinal adjacent au pare-brise d'une languette 150 ayant en section transversale un profil recourbé vers le bas et venant s'appliquer par son bord libre 151 sur la surface externe du pare-brise 2. Plus précisément, la languette 150 présente en section transversale une première partie 152 généralement plane située dans le prolongement de la face supérieure apparente 110, prolongée par une deuxième partie 153 généralement plane, inclinée vers le bas, et dont le bord libre 151 s'applique sur la surface externe du pare-brise 2. La partie 152 sert au montage du module formant réservoir 100 sur la caisse C du véhicule, par tous moyens appropriés connus de l'homme de métier. Il peut s'agir, comme représenté, d'un vissage de la partie 152 sur la caisse C du véhicule. On notera à l'examen de la figure 3 la présence d'un joint J interposé entre le bord 2a du pare-brise 2 et la caisse C du véhicule.

Les parties creuses allongées 120 et 140 présentent des sections transversales s'élargissant en éloignement du plan médian transversal correspondant au plan de coupe de la figure 3 jusqu'à se joindre pour former les parties latérales 160 et 180 et faire communiquer entre elles les cavités 121 et 141 précitées. Les parties latérales 160 et 180 présentent des fonds généralement plans et situés en deçà du fond de la cavité 141 formée par la partie creuse allongée 120. Sur les figures, seul le fond 181 de la partie latérale 180 est apparent.

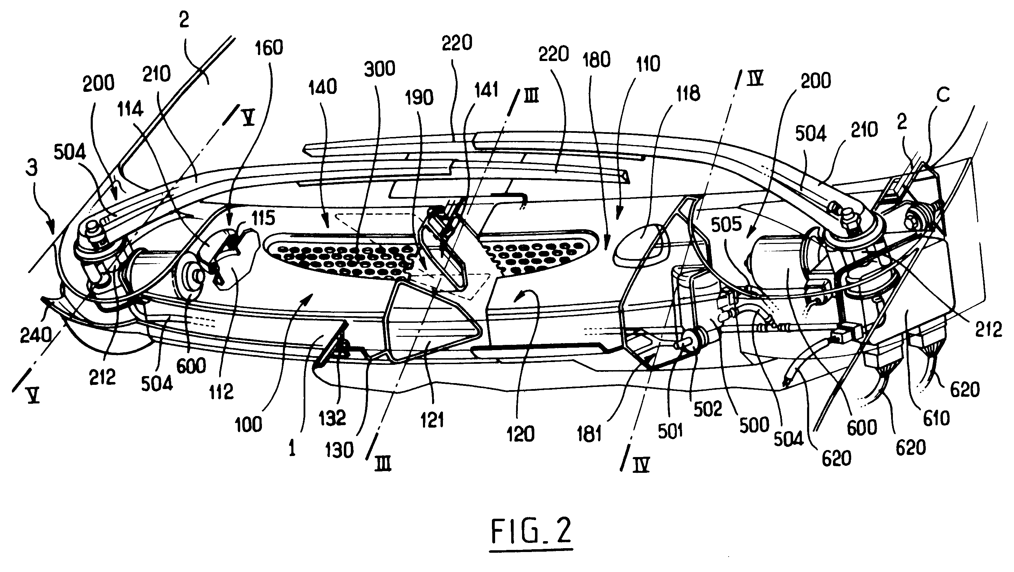

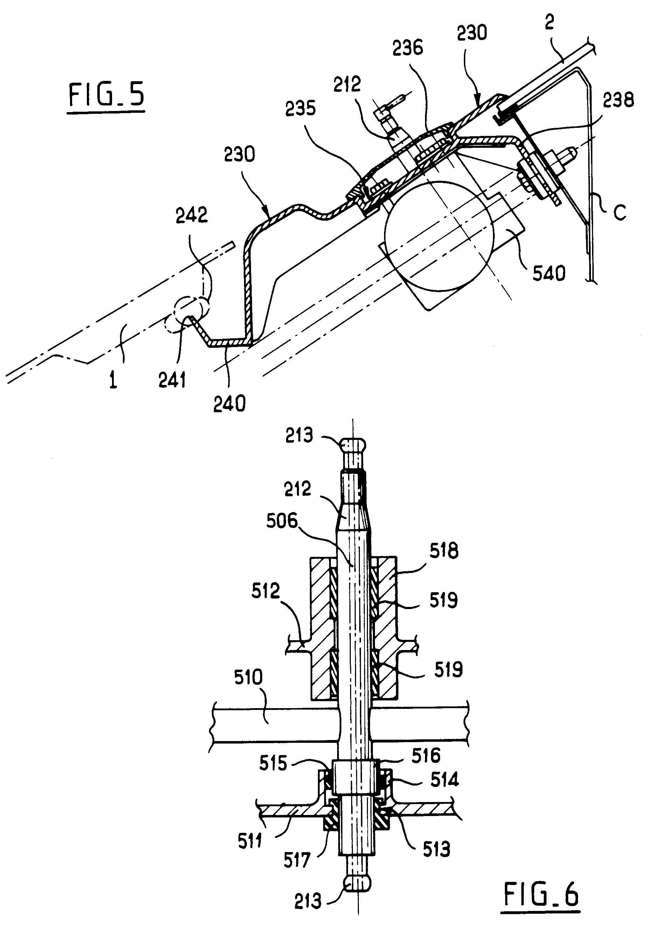

De préférence, comme représenté, le module formant réservoir 100 comporte une pompe 500 pour prélever du liquide lave-glace en vue de l'aspersion du pare-brise. Plus particulièrement, la pompe 500 est montée dans un renfoncement 183 formé par la paroi de la partie latérale 180. La pompe 500 comporte un embout d'aspiration 501 traversant la paroi de la partie latérale 180 en un point situé de préférence, comme représenté, à proximité du fond 181. L'étanchéité de la traversée de la paroi par l'embout 501 est assurée par un joint d'étanchéité 502. La pompe 500 comporte un embout de refoulement 503 connecté, comme montré sur la figure 2, à des tubulures 504 acheminant le liquide lave-glace L prélevé par l'embout 501 vers des buses d'aspersion du pare-brise, incorporées, suivant l'exemple de réalisation des figures 1 à 6, dans les bras d'essuie-glace 210. La pompe 500 est alimentée en énergie électrique par un câble d'alimentation électrique 505, partiellement représenté. L'alimentation des buses d'aspersion incorporées aux bras d'essuie-glace 210, non représentées, se fait de préférence, comme cela sera décrit plus particulièrement dans la suite en référence à la figure 6, au moyen d'un conduit 506 traversant l'arbre d'entraînement 212 selon son axe.

Conformément à une caractéristique avantageuse de l'invention, le module formant réservoir 100 est muni sur sa face supérieure apparente 110 d'un orifice de remplissage 112, directement accessible depuis l'extérieur du véhicule, et de moyens de fermeture de cet orifice. Plus particulièrement, une paroi 115 est formée sur le contour de l'orifice 112, faisant saillie sur la surface externe apparente 110, et munie sur son bord libre d'un collet destiné à retenir par cloquage un capuchon 114 de fermeture de l'orifice 112. La paroi 115 se prolonge à l'intérieur du module formant réservoir 100 sur une longueur sensiblement égale à la longueur faisant saillie sur la surface externe apparente 110 afin de conférer une bonne résistance aux efforts mécaniques lors de la mise en place et de l'enlèvement du capuchon 114. De préférence comme représenté sur la figure 2, la partie latérale 180 supporte un capuchon 118 semblable au capuchon 114, en vue de conférer au module 100 un aspect extérieur symétrique par rapport au plan médian transversal précité. Il peut s'agir de moyens analogues aux moyens décrits précédemment pour retenir le capuchon 114 ou de tout autre moyen de montage approprié connu de l'homme de métier.

Si l'on se reporte maintenant à la figure 5 qui montre en section, de façon schématique et partielle, un module d'essuyage 200, on remarque que celui-ci présente une surface supérieure apparente 230 généralement plane et située dans le prolongement de la surface externe du capot 1 et du pare-brise 2. Plus particulièrement, la surface 230 présente un contour délimité d'une part, par le bord inférieur 2a du pare-brise et d'autre part, par une ligne courbe dont la concavité est orientée vers le bord inférieur du pare-brise, épousant sensiblement le contour du bord libre adjacent du capot 1. Les modules d'essuyage 200 sont munis sur leur côté adjacent du capot 1 d'une languette 240 recourbée vers le haut, formant gouttière et dont le bord libre 241 porte un joint d'étanchéité 242 destiné à s'appliquer contre la surface interne du capot 1. Le joint 242 présente une section initialement non déformée circulaire, prenant en s'appliquant contre la surface interne du capot 1 une section généralement aplatie représentée en pointillés. L'assemblage entre un module d'essuyage 200 et le module formant réservoir 100 est tel que la languette 130 vient recouvrir au moins partiellement la languette 240, de telle sorte que l'eau recueillie par la gouttière formée par la languette 130 (par exemple par temps de pluie ou lors du lavage du véhicule) s'écoule dans la languette 240 et le long de celle-ci jusqu'à son extrémité libre où elle est évacuée par gravité.

Les moyens d'entraînement des bras d'essuie-glace 210 sont connus en eux-mêmes et seront brièvement décrits en référence aux figures 2, 5 et 6. De préférence, comme représenté, les deux bras 210 sont entraînés en rotation chacun par un moteur 600, les moteurs 600 étant synchronisés dans leur mouvement de rotation par des moyens de commande électriques, ici électroniques 610 connus en eux-mêmes, ces moyens de commande électriques pouvant avoir d'autres fonctions liées au fonctionnement de l'essuyage et/ou du lavage, tels que la commande de la pompe de lave-glace, la surveillance du niveau de liquide de lave-glace, etc... Dans l'exemple de réalisation représenté sur la figure 2, les moyens de commande électronique 610 sont portés par l'un des modules d'essuyage 200 et sont reliés à une alimentation électrique, à des commandes placées dans l'habitacle du véhicule ainsi qu'aux moteurs 600 par des câbles électriques 620. Les moteurs 600 entraînent chacun en rotation un arbre d'entraînement 212 par l'intermédiaire de moyens d'engrenage 510 partiellement représentés sur la figure 6, logés dans un boîtier 540, limité inférieurement et supérieurement par des parois respectives 511 et 512 partiellement représentées, présentant chacune un passage pour l'arbre 212. Plus particulièrement, la paroi 511 présente un passage 513 permettant à la partie inférieure de l'arbre d'entraînement 212 de s'étendre hors du boîtier 540 contenant les moyens d'engrenage en vue de la connexion de l'arbre à une tubulure d'alimentation du bras d'essuie-glace en liquide lave-glace. Le passage 513 est bordé radialement par une jupe cylindrique de révolution raccordée sur la surface interne de la paroi 511, logeant un palier 515 servant de surface de portée à une douille 516 coaxiale à l'arbre d'entraînement 212. Un joint d'étanchéité 517 s'applique entre la paroi 511 et la partie de l'arbre 212 s'étendant entre la douille 516 et son extrémité inférieure. La paroi supérieure 512 du boîtier 540 forme au niveau de la traversée de cette paroi par l'arbre 212, un manchon 518 logeant deux paliers 519 servant de surface de portée à l'arbre d'entraînement 212. Les extrémités axiales de l'arbre d'entraînement 212 sont munies extérieurement de bourrelets annulaires 213 destinés à retenir par friction des tubulures d'alimentation en liquide lave-glace, communiquant entre elles par l'intermédiaire du conduit intérieur 506 de l'arbre 212. Les moteurs 600 et le boîtier 540 contenant les moyens d'engrenage sont fixés par boulonnage sous un renfoncement 235 ménagé sur la paroi supérieure des modules d'essuyage 200. Un cache 236 muni d'un perçage pour le passage de l'arbre d'entraînement 212 couvre ce renfoncement 235. Les modules d'essuyage 200 présentent sur leur côté adjacent au pare-brise une languette de fixation 238 prenant naissance sur un bord du renfoncement 235 et présentant en extrémité une partie s'étendant parallèlement à la caisse C du véhicule en vue de la fixation, par boulonnage, rivetage ou tout autre moyen approprié, des modules d'essuyage 200 sur cette dernière.

L'assemblage entre le module formant réservoir 100 et un module d'essuyage 200 peut se faire de nombreuses manières.

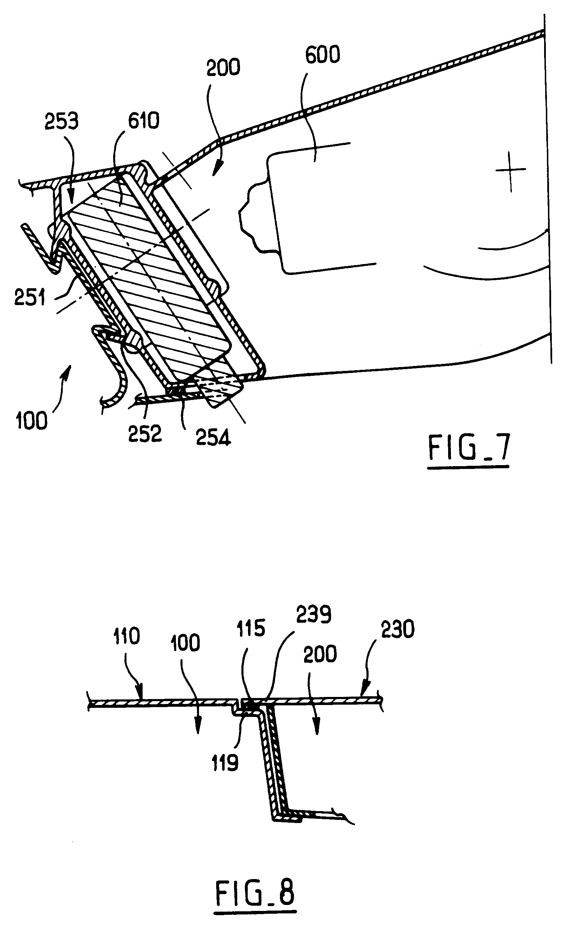

De préférence, comme représenté sur la figure 7, cet assemblage se fait à l'aide de moyens d'assemblage comprenant un tenon 251 formé sur la face latérale du module d'essuyage adjacente au module formant réservoir 100 et d'une mortaise 252 formée sur la face latérale du module formant réservoir en regard, de façon à constituer une glissière en queue d'aronde orientée généralement parallèlement au plan de la face supérieure 110 et transversalement à la direction longitudinale du module formant réservoir. On remarquera à l'examen de la figure 7 que les moyens de commande électronique 610 des moteurs 600 peuvent être placés, en variante, non plus sur le côté externe d'un module d'essuyage 200 comme représenté sur la figure 2, mais dans un logement 253 formé entre le module formant réservoir 100 et un module d'essuyage 200.

De préférence, comme représenté sur la figure 7, les parois adjacentes du module formant réservoir 100 et d'un module d'essuyage 200 se recouvrent à leur partie inférieure de façon à loger entre leurs surfaces en regard un joint d'étanchéité 254.

De préférence également, comme représenté sur la figure 8 les parois adjacentes du module formant réservoir 100 et d'un module d'essuyage 200 se recouvrent à leur partie supérieure de façon à loger entre leurs surfaces en regard un joint d'étanchéité 115. Plus particulièrement, le module formant réservoir 100 présente sur son bord adjacent à un module formant réservoir 200 une région latérale 119 en retrait par rapport au plan de la surface externe apparente 110 et les modules d'essuyage 200 présentent une languette 239 située dans le plan de la face supérieure 230, venant recouvrir la région 119 précitée.

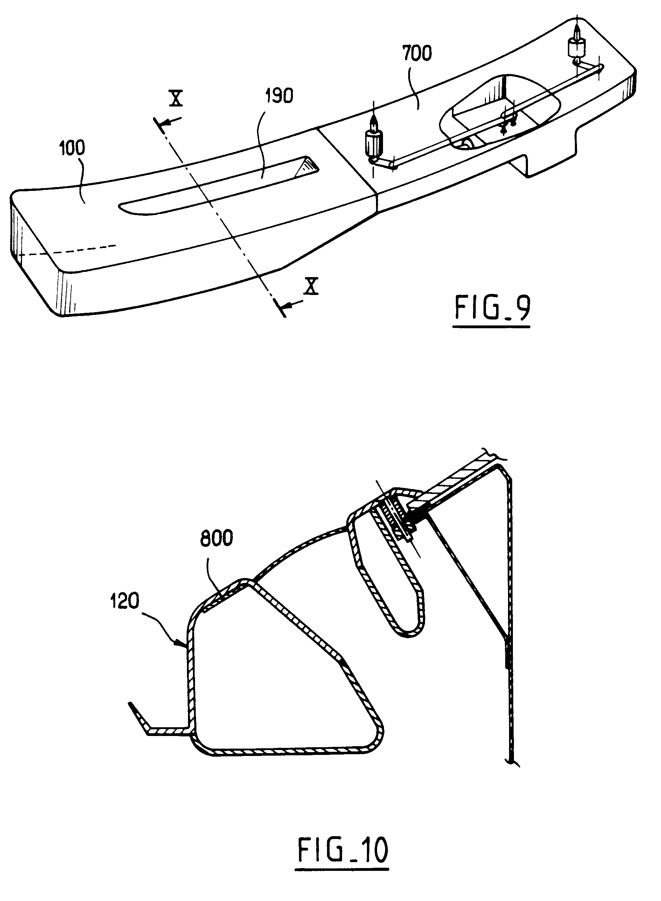

L'invention, grâce à son caractère modulaire, permet par exemple, comme illustré sur la figure 9, l'assemblage du module formant réservoir 100 avec un module d'essuyage 700 comprenant deux bras d'essuie-glace couplés mécaniquement, de façon connue en elle-même, à l'aide d'un attelage bielle-manivelle entraîné par un seul moteur.

Les parties creuses allongées et les parties latérales du module formant réservoir sont avantageusement réalisées par l'assemblage de deux coques en matière plastique dont l'une forme la surface supérieure apparente 110.

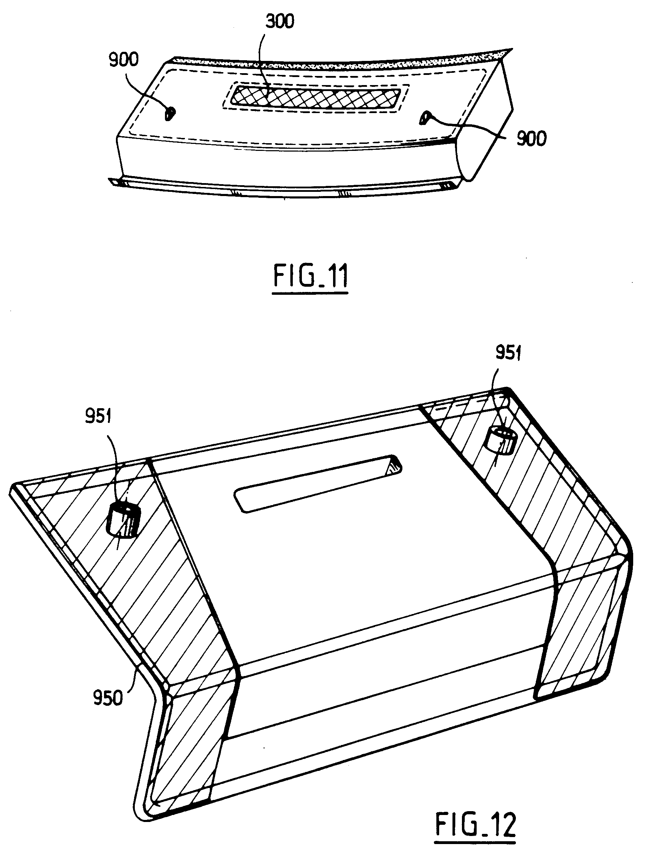

On peut proposer, conformément à un mode de réalisation de l'invention, de regidifier les parties en matière plastique du module formant réservoir à l'aide d'une armature métallique s'étendant sur la longueur du module formant réservoir. Cette armature métallique peut être, comme représenté sur la figure 10, constituée par un insert métallique 800 situé en sous-face de la paroi supérieure du corps creux allongé 120 et intégrée à la matière plastique par surmoulage. On peut également proposer, comme montré sur la figure 11, de rigidifier le module formant réservoir par surmoulage d'une plaque métallique épousant sensiblement la forme de la surface supérieure 110, ajourée intérieurement pour former au niveau du conduit 190 la grille d'entrée d'air 300. On a représenté à titre d'illustration sur la figure 11 deux buses 900 prévues sur la paroi supérieure du module formant réservoir, destinées à asperger le pare-brise 2.

On peut également proposer, comme représenté sur la figure 12 de rigidifier le module formant réservoir en surmoulant les parties creuses allongées et les parties latérales sur une armature métallique tubulaire 950 servant également de support d'assemblage avec au moins un module d'essuyage. L'assemblage du module formant réservoir avec un module d'essuyage peut alors se faire en montant par dessous, à l'aide de moyens de montage appropriés connus en eux-mêmes, le module d'essuyage, l'armature tubulaire étant alors percée de trous 951 servant au passage de l'arbre d'entraînement.

La présente invention n'est pas limitée aux exemples décrits et peut englober toutes autres variantes. Il peut être prévu, notamment, que l'un au moins des modules comporte au moins un organe lié au fonctionnement du véhicule, tel qu'un interrupteur commandant l'éclairage du compartiment moteur, les points d'articulation du capot moteur ou le système fermeture/ouverture de ce capot.

## Revendications

1. Dispositif modulaire (3) pour le lavage et l'essuyage d'un pare-brise (2) de véhicule comportant un capot (1) situé en retrait du bord inférieur (2a) du pare-brise, le dispositif étant constitué d'au moins deux modules (100, 200; 700) à assembler entre eux et au reste du véhicule, l'un des modules (100) étant apte à contenir un liquide lave-glace (L) en formant réservoir et l'autre module (200; 700) supportant des moyens d'essuyage du pare-brise, dispositif caractérisé en ce que les modules sont situés dans le prolongement l'un de l'autre.

2. Dispositif selon la revendication 1, caractérisé en ce que le module formant réservoir (100) englobe un conduit (190) servant à guider l'air depuis l'extérieur vers l'intérieur du véhicule, muni en entrée d'une grille d'entrée d'air (300).

3. Dispositif selon la revendication 2, caractérisé en ce que la grille d'entrée d'air (300) est monobloc avec le module (100).

4. Dispositif selon la revendication 2 ou 3, caractérisé en ce que le module formant réservoir (100) présente deux parties creuses allongées (120, 140) formant des cavités (121, 141) aptes à contenir ledit liquide, respectivement adjacentes au capot (1) et au pare-brise (2), s'étendant côte-à-côte et de façon espacée, et deux parties latérales (160, 180) joignant les extrémités desdites parties creuses allongées de façon à faire communiquer entre elles lesdites cavités, le module formant réservoir présentant en outre une face supérieure apparente (110) généralement plane et située dans le prolongement de la surface externe du capot, s'étendant longitudinalement sur une partie au moins de la largeur du véhicule et latéralement entre le capot et le bord inférieur du pare-brise, les parois en regard des deux parties allongées et des parties latérales formant ledit conduit (190), orienté généralement perpendiculairement au plan de la face supérieure et débouchant sur cette face.

5. Dispositif selon la revendication 4, caractérisé en ce que le module formant réservoir (100) est muni, sur son côté longitudinal adjacent au capot, d'une languette (130) recourbée vers le haut formant gouttière et dont le bord libre (131) est situé sous le capot.

6. Dispositif selon la revendication 5, caractérisé en ce que la languette (130) est munie sur son bord libre d'un joint d'étanchéité (132) destiné à s'appliquer contre la surface interne du capot.

7. Dispositif selon l'une des revendications 4 à 6, caractérisé en ce qu'il est prévu sur la face supérieure apparente (110) du module formant réservoir (100) un orifice de remplissage (112) en liquide lave-glace, et des moyens (115) pour recevoir un capuchon (114) de fermeture de cet orifice.

8. Dispositif selon la revendication 7, caractérisé en ce que l'orifice de remplissage (112) est situé sur l'une des parties latérales (160, 180), l'autre partie latérale étant munie de moyens pour recevoir un capuchon (118) semblable audit capuchon de fermeture de l'orifice, en vue de conférer un aspect extérieur symétrique par rapport à un plan médian transversal pour le module formant réservoir.

9. Dispositif selon l'une des revendications 4 à 8, caractérisé en ce que le module formant réservoir est muni sur son côté longitudinal adjacent au pare-brise d'une languette (150) ayant en section transversale un profil recourbé vers le bas et venant s'appliquer par son bord libre (151) sur le pare-brise.

10. Dispositif selon l'une des revendications 1 à 9, caractérisé en ce que le module formant réservoir porte une pompe (500) pour prélever du liquide lave-glace en vue de l'aspersion du pare-brise.

11. Dispositif selon l'une des revendications 1 à 10, caractérisé en ce qu'il comporte deux modules d'essuyage (200) situés de part et d'autre du module formant réservoir (100) et dans son prolongement, chacun des modules d'essuyage comportant un bras d'essuie-glace (210) solidaire en rotation d'un arbre d'entraînement (212) et des moyens d'entraînement en rotation (600) de l'arbre.

12. Dispositif selon la revendication 11, caractérisé en ce qu'au moins un module (100, 200) comporte des moyens électriques (610) liés aux fonctions de lavage et d'essuyage du dispositif.

13. Dispositif selon la revendication 11 ou 12, caractérisé en ce que chaque bras d'essuie-glace est muni d'au moins une buse d'aspersion du pare-brise, reliée à une tubulure d'alimentation en liquide lave-glace (504), par l'intermédiaire d'un conduit (506) traversant l'arbre d'entraînement correspondant (212) selon son axe.

14. Dispositif selon l'une des revendications 1 à 13, caractérisé en ce que le module formant réservoir (100) et un module d'essuyage (200) présentent des parois adjacentes se recouvrant à leur partie supérieure.

15. Dispositif selon l'une des revendications 1 à 14, caractérisé en ce que l'assemblage entre le module formant réservoir et un module d'essuyage se fait à l'aide de moyens d'assemblage comprenant un tenon (251) formé sur une face latérale de l'un des modules et une mortaise (252) formée sur la face latérale en regard de l'autre module de façon à constituer une glissière en queue d'aronde.

16. Dispositif selon l'une des revendications 1 à 15, caractérisé en ce que le module formant réservoir comporte une armature métallique.

17. Dispositif selon l'une des revendications 1 à 16, caractérisé en ce que le module formant réservoir comprend deux coques en matière plastique assemblées entre elles.

18. Dispositif selon la revendication 16 ou 17, caractérisé en ce que l'armature métallique (950) sert de moyen d'assemblage avec au moins un module d'essuyage.

19. Dispositif selon la revendication 18, caractérisé en ce que l'armature métallique est percée d'au moins un trou (951) servant au passage d'un arbre d'entraînement d'un bras d'essuie-glace porté par un module d'essuyage.

20. Dispositif selon l'une des revendications 1 à 19, caractérisé en ce qu'au moins un module (100, 200 ; 700) comporte au moins un organe lié au fonctionnement du véhicule.

## Claims

1. Modular device (3) for washing and wiping the windscreen (2) of a vehicle having a bonnet (1) situated so as to be recessed with respect to the bottom edge (2a) of the windscreen, the device consisting of at least two modules (100, 200; 700) to be connected to each other and to the remainder of the vehicle, one of these modules (100) being suitable for containing a screen-wash liquid (L) whilst forming a reservoir and the other module (200; 700) supporting means of wiping the windscreen, a device characterised in that the modules are situated in line with each other.

2. Device according to Claim 1, characterised in that the module forming a reservoir (100) includes a conduit (190) serving to guide the air from the outside to the inside of the vehicle, provided at its inlet with an air inlet grille (300).

3. Device according to Claim 2, characterised in that the air inlet grille (300) is made in one piece with the module (100).

4. Device according to Claim 2 or 3, characterised in that the module forming a reservoir (100) has two elongate hollow parts (120, 140) forming cavities (121, 141) suitable for containing the said liquid, respectively adjacent to the bonnet (1) and to the windscreen (2), lying side by side and spaced apart, and two lateral parts (160, 180) joining the ends of the said elongate hollow parts so as to cause the said cavities to communicate with each other, the module forming a reservoir also having a visible top face (110) plane overall and situated in line with the external surface of the bonnet, extending longitudinally over at least part of the width of the vehicle and laterally between the bonnet and the bottom edge of the windscreen, the facing walls of the two elongate parts and of the lateral parts forming the said conduit (190), oriented perpendicularly overall to the plane of the top face and opening out on this face.

5. Device according to Claim 4, characterised in that the module forming a reservoir (100) is provided, on its longitudinal side adjacent to the bonnet, with an upward curving tongue (130) forming a channel and the free edge (131) of which is situated below the bonnet.

6. Device according to Claim 5, characterised in that the tongue (130) is provided on its free edge with a sealing joint (132) designed to be applied against the internal surface of the bonnet.

7. Device according to one of Claims 4 to 6, characterised in that an orifice (112) for filling with screen-wash liquid is provided on the visible top face (110) of the module forming a reservoir (100), and means (115) for receiving a cap (114) for closing off this orifice.

8. Device according to Claim 7, characterised in that the filling orifice (112) is situated on one of the lateral parts (160, 180), the other lateral part being provided with means for receiving a cap (118) similar to the said cap for closing off the orifice, with a view to conferring an external appearance which is symmetrical with respect to a transverse mid-plane for the module forming a reservoir.

9. Device according to one of Claims 4 to 8, characterised in that the module forming a reservoir is provided on its longitudinal side adjacent to the windscreen with a tongue (150) having in transverse section a downward curving profile and coming to be applied by its free edge (151) to the windscreen.

10. Device according to one of Claims 1 to 9, characterised in that the module forming a reservoir carries a pump (500) for taking off screen-wash liquid with a view to spraying the windscreen.

11. Device according to one of Claims 1 to 10, characterised in that it includes two wiper modules (200) situated on each side of the module forming a reservoir (100) and in line with it, each of the wiper modules having a windscreen-wiper arm (210) fixed with respect to rotation to a drive shaft (212) and means (600) for rotatably driving the shaft.

12. Device according to Claim 11, characterised in that at least one module (100, 200) includes electrical means (610) relating to the washing and wiping functions of the device.

13. Device according to Claim 11 or 12, characterised in that each windscreen-wiper arm is provided with at least one nozzle for spraying the windscreen, connected to a tube for supplying screen-wash liquid (504), by means of a conduit (506) passing through the corresponding drive shaft (212) along its axis.

14. Device according to one of Claims 1 to 13, characterised in that the module forming a reservoir (100) and a wiper module (200) have adjacent walls overlapping at their upper part.

15. Device according to one of Claims 1 to 14, characterised in that the connection between the module forming a reservoir and a wiper module is effected by means of assembly means comprising a tenon (251) formed on a lateral face of one of the modules and a mortice (252) formed on the opposite lateral face of the other module so as to constitute a dovetail channel.

16. Device according to one of Claims 1 to 15, characterised in that the module forming a reservoir has a metallic frame.

17. Device according to one of Claims 1 to 16, characterised in that the module forming a reservoir comprises two plastic shells connected together.

18. Device according to Claim 16 or 17, characterised in that the metallic frame (950) serves as a means of connection with at least one wiper module.

19. Device according to Claim 18, characterised in that the metallic frame has in it at least one hole (951) serving for the passage of a drive shaft for a windscreen-wiper arm carried by a wiper module.

20. Device according to one of Claims 1 to 19, characterised in that at least one module (100, 200; 700) has at least one component connected with the functioning of the vehicle.

## Patentansprüche

1. Modulare Vorrichtung (3) zum Waschen und Wischen der Windschutzscheibe (2) eines Kraftfahrzeugs mit einer Motorhaube (1), die zur Unterkante (2a) der Windschutzscheibe zurückversetzt angeordnet ist, wobei die Vorrichtung aus wenigstens zwei Modulen (100, 200; 700) besteht, die miteinander und mit dem Rest des Fahrzeugs zu verbinden sind, wobei eines der Module (100) eine Scheibenwaschflüssigkeit aufnehmen kann und einen Scheibenwaschbehälter bildet, während das andere Modul (200; 700) Mittel zum Wischen der Windschutzscheibe trägt , **dadurch gekennzeichnet,** daß diese Module in der Verlängerung zueinander angeordnet sind.

2. Vorrichtung nach Anspruch 1 , **dadurch gekennzeichnet,** daß das als Scheibenwaschbehälter ausgebildete Modul (100) einen Kanal (190) umschließt, der für die Zufuhr von Außenluft in das Innere des Fahrzeugs dient und eintrittsseitig mit einem Lufteinlaßgitter (300) versehen ist.

3. Vorrichtung nach Anspruch 2 , **dadurch gekennzeichnet,** daß das Lufteinlaßgitter (300) einteilig mit dem Modul (100) ausgeführt ist.

4. Vorrichtung nach Anspruch 2 oder 3 , **dadurch gekennzeichnet,** daß das als Scheibenwaschbehälter ausgebildete Modul (100) zwei längliche Hohlteile (120, 140) aufweist, die Aufnahmen (121, 141) für die besagte Scheibenwaschflüssigkeit bilden, die an der Motorhaube (1) bzw. an der Windschutzscheibe (2) angrenzen und sich mit einem Zwischenraum nebeneinander erstrecken, sowie zwei Seitenteile (160, 180), welche die Enden der besagten länglichen Hohlteile verbinden, so daß eine Verbindung zwischen den Aufnahmen hergestellt wird, wobei das als Scheibenwaschbehälter ausgebildete Modul außerdem eine sichtbare Oberseite (110) aufweist, die allgemein flach ausgeführt und in der Verlängerung der Außenfläche der Motorhaube angeordnet ist, wobei sie sich in Längsrichtung wenigstens auf einem Teil der Fahrzeugbreite und seitlich zwischen der Motorhaube und der Unterkante der Windschutzscheibe erstreckt, während die gegenüberliegenden Wände der beiden länglichen Teile und der Seitenteile den besagten Kanal (190) bilden, der allgemein senkrecht zur Ebene der Oberseite ausgerichtet ist und an dieser Oberseite mündet.

5. Vorrichtung nach Anspruch 4 , **dadurch gekennzeichnet,** daß das als Scheibenwaschbehälter ausgebildete Modul (100) auf seiner an der Motorhaube angrenzenden Seite mit einer nach oben gebogenen Leiste (130) versehen ist, die eine Rinne bildet und deren freie Kante (131) unter der Motorhaube angeordnet ist.

6. Vorrichtung nach Anspruch 5 , **dadurch gekennzeichnet,** daß die Leiste (130) an ihrer freien Kante mit einer Dichtung (132) versehen ist, die an der Innenfläche der Motorhaube angedrückt wird.

7. Vorrichtung nach einem der Ansprüche 4 bis 6, **dadurch gekennzeichnet,** daß an der sichtbaren Oberseite (110) des als Scheibenwaschbehälter ausgebildeten Moduls (100) eine Einfüllöffnung (112) für die Scheibenwaschflüssigkeit und Mittel (115) zum Einsetzen einer Verschlußkappe (114) für diese Öffnung vorgesehen sind.

8. Vorrichtung nach Anspruch 7 , **dadurch gekennzeichnet,** daß die Einfüllöffnung (112) auf einem der Seitenteile (160, 180) angeordnet ist, während der andere Seitenteil mit Mitteln zum Einsetzen einer Abdeckkappe (118) versehen ist, die ähnlich wie die besagte Verschlußkappe für die Öffnung ausgeführt ist, um dem als Scheibenwaschbehälter ausgebildeten Modul (100) außen eine symmetrische Gestalt, bezogen auf die eine quer verlaufende Mittelebene, zu verleihen.

9. Vorrichtung nach einem der Ansprüche 4 bis 8, **dadurch gekennzeichnet,** daß das als Scheibenwaschbehälter ausgebildete Modul auf seiner an der Windschutzscheibe angrenzenden Längsseite mit einer Leiste (150) versehen ist, die im Querschnitt ein nach unten gebogenes Profil aufweist und mit ihrer freien Kante (151) an der Windschutzscheibe anliegt.

10. Vorrichtung nach einem der Ansprüche 1 bis 9, **dadurch gekennzeichnet,** daß das als Scheibenwaschbehälter ausgebildete Modul eine Pumpe (500) für die Entnahme von Scheibenwaschflüssigkeit zum Aufspritzen auf die Windschutzscheibe trägt.

11. Vorrichtung nach einem der Ansprüche 1 bis 10, **dadurch gekennzeichnet,** daß sie zwei Wischmodule (200) umfaßt, die beiderseits des als Scheibenwaschbehälter ausgebildeten Moduls (100) und in dessen Verlängerung angeordnet sind, wobei jedes der Wischmodule einen Scheibenwischerarm (210), der drehfest mit einer Antriebswelle (212) verbunden ist, und Mittel für den Drehantrieb (600) der Welle umfaßt.

12. Vorrichtung nach Anspruch 11, **dadurch gekennzeichnet,** daß wenigstens ein Modul (100, 200) elektrische Mittel (610) umfaßt, die mit den Wasch- und Wischfunktionen der Vorrichtung verbunden sind.

13. Vorrichtung nach Anspruch 11 oder 12 , **dadurch gekennzeichnet,** daß jeder Scheibenwischerarm mit wenigstens einer Düse für das Aufspritzen auf die Windschutzscheibe versehen ist, die mit einem Stutzen für die Zuleitung von Scheibenwaschflüssigkeit (504) über einen Kanal (506) verbunden ist, der durch die entsprechende Antriebswelle (212) entlang ihrer Achse hindurchgeht.

14. Vorrichtung nach einem der Ansprüche 1 bis 13, **dadurch gekennzeichnet,** daß das als Scheibenwaschbehälter ausgebildete Modul (100) und ein Wischmodul (200) angrenzende Wände aufweisen, die sich in ihrem oberen Teil überdecken.

15. Vorrichtung nach einem der Ansprüche 1 bis 14, **dadurch gekennzeichnet,** daß die Verbindung zwischen dem als Scheibenwaschbehälter ausgebildeten Modul und einem Wischmodul anhand von Verbindungsmitteln erfolgt, die einen Zapfen (251), der auf einer Seitenfläche eines der Module vorgesehen ist, und ein Zapfenloch (252) umfassen, das auf der gegenüberliegenden Seitenfläche des anderen Moduls vorgesehen ist, so daß eine schwalbenschwanzförmige Gleitführung gebildet wird.

16. Vorrichtung nach einem der Ansprüche 1 bis 15, **dadurch gekennzeichnet,** daß das als Scheibenwaschbehälter ausgebildete Modul eine Metallbewehrung umfaßt.

17. Vorrichtung nach einem der Ansprüche 1 bis 16, **dadurch gekennzeichnet,** daß das als Scheibenwaschbehälter ausgebildete Modul zwei Schalen aus Kunststoff umfaßt, die miteinander verbunden sind.

18. Vorrichtung nach Anspruch 16 oder 17 , **dadurch gekennzeichnet,** daß die Metallbewehrung (950) als Mittel zur Verbindung mit wenigstens einem Wischmodul dient.

19. Vorrichtung nach Anspruch 18, **dadurch gekennzeichnet,** daß in die Metallbewehrung wenigstens eine Bohrung (951) für den Durchgang einer Antriebswelle eines an einem Wischmodul angebrachten Scheibenwischerarms eingearbeitet ist.

20. Vorrichtung nach einem der Ansprüche 1 bis 19, **dadurch gekennzeichnet,** daß wenigstens ein Modul (100, 200; 700) wenigstens ein mit dem Betrieb des Fahrzeugs verbundenes Organ umfaßt.
